Europäisches Patentamt

European Patent Office

Office européen des brevets

(19)

(11) Veröffentlichungsnummer: **0 175 020**
**B1**

(12) **EUROPÄISCHE PATENTSCHRIFT**

(45) Veröffentlichungstag der Patentschrift:
07.06.89

(21) Anmeldenummer: 84115738.1

(22) Anmeldetag: 18.12.84

(51) Int. Cl.⁴: **F 16 D   3/14, F 16 D  13/64**

(54) Kupplungsreibteller, insbesondere für Kraftfahrzeuge.

(30) Priorität: 13.09.84 HU 345184

(43) Veröffentlichungstag der Anmeldung:
26.03.86 Patentblatt 86/13

(45) Bekanntmachung des Hinweises auf die Patenterteilung: 07.06.89 Patentblatt 89/23

(84) Benannte Vertragsstaaten:
AT DE FR GB IT NL SE

(56) Entgegenhaltungen:
DE--A-- 2 323 872
DE--A-- 2 902 188
DE--A-- 3 133 728
DE--A-- 3 138 275
DE--A-- 3 237 809
FR--A-- 2 449 822
FR--A-- 2 489 910
US--A-- 4 144 959
US--A-- 4 254 855
US--A-- 4 406 357

(73) Patentinhaber: Csepel Autogyár
Pf. 38
H-2311 Szigetszentmiklos (HU)

(72) Erfinder: Geiger, Gyula, Dipl.-Ing.
Marx K. u. 131
H-1020 Budapest (HU)
Erfinder: Töröcsik, Laszlo, Dipl.-Ing.
Kakukk u. 10/b
H-1126 Budapest (HU)
Erfinder: Kovacs, Istvan, Dipl.-Ing.
Radnoti u. 5/16
H-2310 Szigetszentimiklos (HU)

(74) Vertreter: Eitle, Werner, Dipl.-Ing. et al
Hoffmann, Eitle & Partner Patentanwälte Arabellastrasse 4
D-8000 München 81 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Kupplungsreibteller, der insbesondere für Kraftfahrzeuge oder sonstige mit Verbrennungsmotoren angetriebene Anlagen geeignet ist.

Es ist eine wohlbekannte Tatsache, daß in dem Kupplungsreibteller der Kraftfahrzeuge zwischen der Mitnehmerscheibe und der Nabe momentübertragene Federn eingesetzt sind. Daher besteht die Möglichkeit, daß die Mitnehmerscheibe und die Nabe gegenüber auseinanderschwingen ; daher wird bisher eine Dämpfung mit konstantem Wert oder eine mit der Umdrehungszahl proportionale Dämpfung verwendet.

Bei Dämpfung mit konstantem Wert tritt die ideale Dämpfung eigentlich in dem gesamten Funktionsbereich nur bei einer gewissen Größe der Momentenübertragung auf ; ansonsten ist das System unterdämpft oder überdämpft. Ein weiterer Nachteil der Dämpfung mit konstantem Wert besteht darin, daß während des Gebrauchs, infolge des Verschleißens der strukturellen Elemente die auf das Optimum eingestellte Dämpfung kontinuierlich abnimmt.

Bei der von der Umdrehungszahl abhängigen Dämpfung sind im Funktionsbereich schon mehrere Knotenpunkte gegeben, in denen eine ideale Dämpfung erreicht werden kann. Der Grund dafür besteht darin, daß die Größe des Dämpfungsmoments — das mit der zu der Umdrehungszahl gehörenden zentrifugalen Kraft proportional ist — der zu dem übertragenen Moment erforderlichen Dämpfung entspricht. Diese Feststellung ist hauptsächlich in dem unteren Bereich der Betriebsumdrehungszahl des Motors gültig, wo das Moment des Motors bis zum maximalen Moment einen zunehmenden Charakter aufweist.

Aus dem Gesagten geht eindeutig hervor, daß diese Lösungen keine befriedigende Dämpfung mit sich bringen. Der Grund dafür besteht darin, daß die Größe der während der Kraftübertragung entstehenden Schwingungen immer dem jeweiligen Moment der schwingungserzeugenden Quelle des Motors proportional ist. Nach dem sowjetischen Verfasser B. Ivanov beträgt das in der Kraftübertragung eines Kraftfahrzeugs erforderliche Dämpfungsmoment $M_T$

$$M_T = \pi \cdot R \cdot K \cdot Z \cdot M$$

wobei

R   den optimalen Dämpfungsproportionalitäts-Faktor,
K   die in dem geprüften Schwingungsknotenpunkt vorhandene Frequenz,
Z   den Ausschlag der harmonischen Schwingbewegungen,
M   das jeweilige « störende » Torsionsmoment des Motors bezeichnen.

Aus der Formel ist ersichtlich, daß das Dämpfungsmoment mit dem übertragenen Moment proportional sein muß.

Die Lösung nach dem französischen Patent FR-A-2 449 822 sucht die obenerwähnte Forderung zu befriedigen, bei der der Kupplungsreibteller mit mehreren schwingungsdämpfenden Systemen versehen ist.

In Abhängigkeit der Ausschlagsgröße treten die einzelnen dämpfenden Einheiten — eine nach der anderen — in Funktion, da die Größe des Ausschlags mit dem übertragenen Moment proportional ist. Der Nachteil dieser Lösung besteht darin, daß der Übergang zwischen den einzelnen Dämpfungsstufen nicht stufenlos ist ; in der Dämpfung erfolgt ein Bruch. Außerdem ist die strukturelle Gestaltung äußerst kompliziert.

Die Aufgabe der Erfindung besteht darin, einen Kupplungsreibteller zu entwickeln, bei dem die Dämpfung der Torsionsschwingungen in allen Belastungsbereichen mit dem übertragenen Moment proportional ist.

Die Erfindung beruht auf der Erkenntnis, daß die Größe des übertragenen Moments mit einfachen Elementen wahrgenommen und in Dämpfungsmoment umgewandelt werden kann.

Die Erfindung löst diese Aufgabe durch die Merkmale des Patentanspruchs 1 oder 10.

Bei einer vorteilhaften Ausführungsform des erfindungsgemäßen Kupplungsreibtellers steht das Vermittlungselement außer der momentübertragenden Feder auch mit einer dazu parallel angeordneten, schwächeren Vorspannfeder in Zwangsverbindung, wobei das andere Ende der Vorspannfeder sich auf demselben Teil aus den antreibenden und angetriebenen Teilen abstützt, mit dem auch das Vermittlungselement in einer unmittelbaren Verbindung steht.

Bei einer weiteren vorteilhaften Ausführungsform des erfindungsgemäßen Kupplungsreibtellers ist das Vermittlungselement durch einen tangential angeordneten Spannkeil gebildet, wobei die Rückseite des Reibelements sich auf der geneigten Fläche des Spannkeils abstützt.

Bei der dritten vorteilhaften Ausführungsform der erfindungsgemäßen Kupplungsreibtellers stützt sich das Reibelement auf der inneren Fläche des Federgehäuses ab.

Bei einer weiteren vorteilhaften Ausführungsform des erfindungsgemäßen Kupplungsreibtellers stützt sich das Reibelement auf der Mantelfläche der Nabe ab.

Bei einer weiteren vorteilhaften möglichen Ausführungsform des erfindungsgemäßen Kupplungsreibtellers sind wenigstens zwei Reibelemente vorgesehen, die mit der Rückseite gegeneinander angeordnet sind.

Bei der sechsten vorteilhaften Ausführungsform des erfindungsgemäßen Kupplungsreibtellers stützen sich die beiden, mit der Rückseite gegeneinander angeordneten Reibelemente auf der Innenfläche der Seiten des Federgehäuses ab.

Bei einer weiteren vorteilhaften Ausführungsform des erfindungsgemäßen Kupplungsreibtellers stützt sich das eine der beiden mit der Rückseite gegeneinander angeordneten Reibelemente auf dem Mantel der Nabe ab, während das andere sich auf der Innenfläche des Außenmantels des Federgehäuses abstützt.

Bei einer weiteren bevorzugten Ausführungsform des erfindungsgemäßen Kupplungsreibtellers sind das Vermittlungselement und das Reibungselement als eine monolithische Einheit ausgestaltet (Anspruch 10).

Zuletzt ist es vorteilhaft, wenn der erfindungsgemäße Kupplungsreibteller wenigstens ein Vermittlungselement und ein damit in Zwangsverbindung stehendes Reibelement aufweist, die an einem gegenüber den sonstigen Elementen entgegengesetzten Ende der momentübertragenden Feder angeordnet sind.

Die Erfindung wird anhand einiger Ausführungsbeispiele mit Hilfe der beiliegenden Zeichnungen näher erläutert. Es zeigen :

Fig. 1   die Seitenansicht eines Kupplungsreibtellers,
Fig. 2   den Querschnitt des Kupplungsreibtellers nach Fig. 1,
Fig. 3   einen anderen Querschnitt des Kupplungsreibtellers,
Fig. 4   die Dämpfungscharakteristik,
Fig. 5 und 6   Seitenansicht und Schnitt eines anderen Kupplungsreibtellers,
Fig. 7, 8 und 9   Seitenansicht, Schnitt und Bruchansicht einer weiteren Ausführung des erfindungsgemässen Kupplungsreibtellers, und zuletzt,
Fig. 10 und 11   Schnitt und Seitenansicht einer weiteren Ausführung.

Die Federgehäuse 3, 4 sind mit Nieten 2 auf der Nabe 1 befestigt. Im Bereich der Flansche sind die Federgehäuse mit den Nieten 5 zusammengehalten, die das Ausbiegen der Federgehäuse verhindern.

Die Mitnehmerscheibe 6 ist verdrehbar auf die Nabe 1 aufgesetzt. An beiden Seiten der Mitnehmerscheibe 6 sind die Stützscheiben 7 und 8 mit den Nieten 9 angenietet. Die Stützscheiben füllen den Raum zwischen den Federgehäusen vollkommen aus. Die Reibbeläge 10 sind mit den Nieten 11 an der Mitnehmerscheibe 6 befestigt. Bei diesem Kupplungsreibteller bildet die mit den Reibbelägen 10 und den Stützscheiben 7, 8 versehene Mitnehmerscheibe 6 — auf eine bei Kraftfahrzeugen übliche Weise — den antreibenden Teil, während die mit den Federgehäusen 3, 4 ausgerüstete Nabe 1 den angetriebenen Teil bildet.

Sowohl in den Federgehäusen 3 und 4, wie auch in der von den Stützscheiben 7, 8 umschlossenen Mitnehmerscheibe 6 sind Ausschnitte ausgearbeitet, die ein Nest bilden, in dem die momentübertragenden Federn 12 angeordnet sind.

Bei der einen momentübertragenden Feder 12 ist der Ausschnitt in der Mitnehmerscheibe 6 und in den Stützscheiben 7, 8 länger als in den Federgehäusern 3, 4. In diesem längeren Ausschnitt ist am Ende der momentübertragenden Feder 12 ein Vermittlungselement angeordnet, das in unserem Fall ein Spannkeil 14 ist, des weiteren stützt sich auf der im Ausschnitt ausgestalteten Stützfläche 13 ein dem Spannkeil 14 zugewandter Spannkeil 15 ab, auf dessen geneigter Fläche die Reibelemente 16 und 17 mit ihren Rückseiten anliegen.

Die Reibflächen 18 und 19 der Reibelemente 16 und 17 stützen sich auf die Innenfläche der Federgehäuse 4 und 3 ab.

In der momentübertragenden Feder 12 ist eine weitere Vorspannfeder 20 angeordnet, deren eines Ende auf die Rückseite des Spannkeils 14 anliegt und deren anderes Ende sich auf der Mitnehmerscheibe 6 und den Stützscheiben 7, 8 abstützt und deren Aussendurchmesser höchstens deren gesamter Dicke entspricht.

Der Kupplungsreibteller wird folgenderweise gedämpft :

Die Dämpfung wird von der momentübertragenden Feder 12, der Vorspannfeder 20, den Spannkeilen 14 und 15, sowie den Reibelementen 16 und 17 gemeinsam erzeugt.

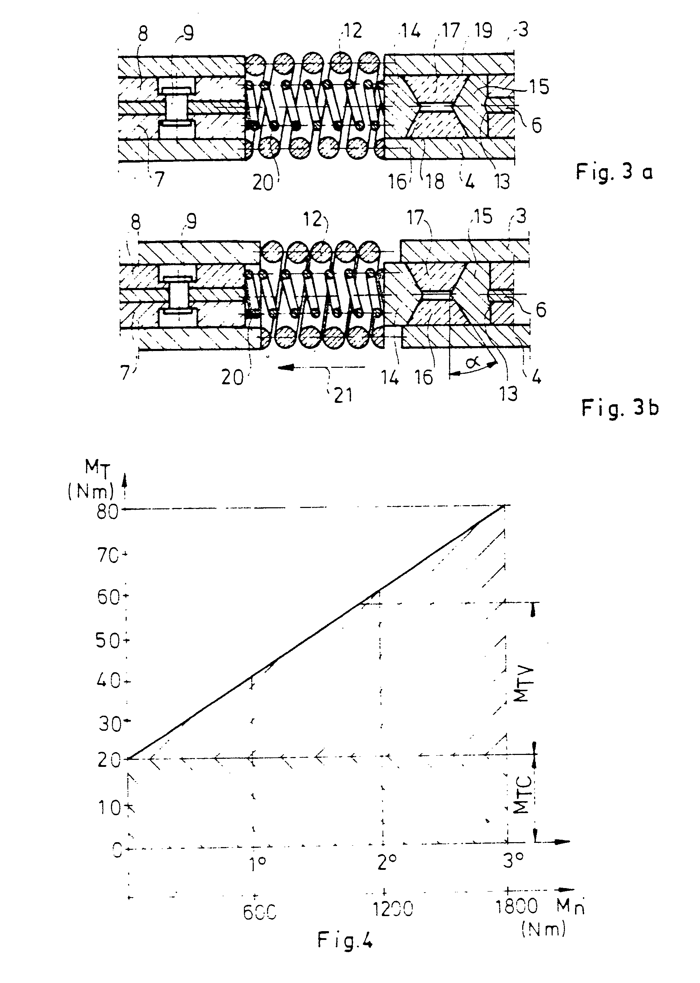

Im Stillstand befinden sich die erwähnten Elemente in der in Skizze a.) der Fig. 3 dargestellten Position. Nun hält die momentübertragende Feder 12 die Mitnehmerscheibe 6 und die Federgehäuse 3 und 4 in einer Stellung, in der sie sich im Ausschnitt auf beide Elemente abstützt. In dieser Stellung belastet die momentübertragende Feder 12 weder die Spannkeile 14 und 15, die zwischen dem Federende und der Stützfläche 13 der Mitnehmerscheibe 6 angeordnet sind, noch die Reibelemente 16 und 17. Mit Hinsicht darauf, dass das dem Spannkeil 14 entgegengesetzte Ende der Vorspannfeder 20 sich auf die Mitnehmerscheibe 6 abstützt, übt sie eine, von der Dimensionierung abhängende, gewisse Kraft auf den Spannkeil 14 aus und presst die Reibelemente 16 und 17 mit dem Spannkeil 15 zusammen an die Innenfläche der Federgehäuse 3 und 4. Demnach ist ständig eine geringe Reibkraft zwischen den Reibflächen 18 und 19 der Reibelemente und der Innenfläche der Federgehäuse 3 und 4 vorhanden.

Wenn nun der Motor angelassen und die Kupplung geschlossen werden, bemüht sich das Schwungrad des Motors, den Kupplungsreibteller in der mit dem Pfeil 21 bezeichneten Richtung mitzunehmen. Als Erfolg verdreht sich zuerst die mit den Reibbelägen 10 versehene Mitnehmerscheibe 6, wonach sie das Moment über die momentübertragenden Federn 12 über die Federgehäuse 3 und 4 der Nabe 1 übergibt.

Dort, wo dämpfende Elemente vorgesehen sind, findet die Momentübergabe über diese Elemente statt. In diesem Fall gestaltet sich eine der Skizze b.) der Fig. 3 entsprechende Situation.

Jetzt bewegt sich die Mitnehmerscheibe 6 gegenüber den Federgehäusen 3 und 4. Nun stützt sich das eine Ende der momentübertragenden Feder 12 nur auf den Federgehäusen 3 und 4 ab, während das andere Ende sich nur auf dem Spannkeil 14 abstützt. Durch Wirkung der entstehenden Federkraft presst der Spannkeil 14 mit dem Spannkeil 15 zusammen die Reibelemente 16 und 17 an die Innenfläche der Federgehäuse 4 und 3, wodurch eine von der Grösse der Federkraft abhängige Reibkraft zwischen den Reibflächen 18 und 19 der Reibelemente 16 und 17, sowie den Innenflächen der Federgehäuse 3 und 4 entsteht. Diese Reibkraft erzeugt die Dämpfung der Torsionsschwingungen.

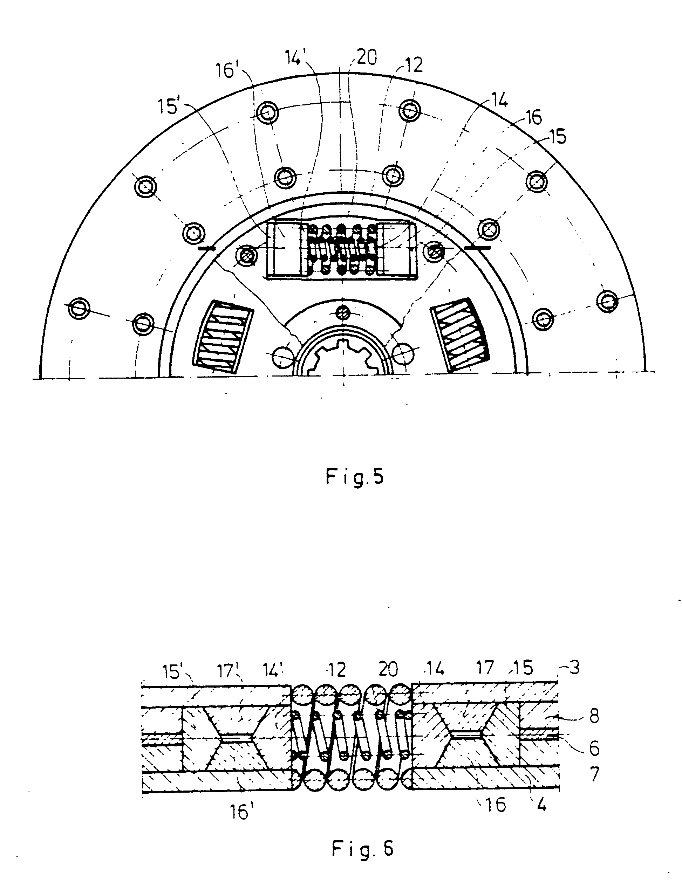

Der Charakter der Dämpfung ist wohl ersichtlich in Fig. 4 ; an der Ordinate des Diagramms ist das Dämpfungsmoment $M_T$ angegeben, an der Abszisse sind das übertragene Moment $M_n$ und der Winkelwert der relativen Verdrehung zwischen der Mitnehmerscheibe 6 und der Nabe 1 dargestellt.

Es ist wohl ersichtlich, dass die jeweilige Dämpfung sich aus der konstanten Grunddämpfung $M_{TC}$ und der veränderlichen Dämpfung $M_{TV}$ zusammensetzt.

Die Grösse der Grunddämpfung $M_{TC}$ hängt von der Federkraft der Vorspannfeder 20 und dem Winkel zwischen dem Spannkeil und dem Reibelement ab.

Die zur Erzeugung der veränderlichen Dämpfung $M_{TV}$ erforderliche Kraft wird von der an der Momentübertragung teilnehmenden momentübertragenden Feder 12 geliefert. Die Zusammendrückung der momentübertragenden Feder 12 ist in direktem Verhältnis mit dem durch den Kupplungsreibteller übertragenen Moment, d.h. in der momentübertragenden Feder 12 entsteht eine mit dem Moment in direktem Verhältnis stehende Kraft, die die Feder über den Spannkeil 14 den Reibelementen 16 und 17 übergibt.

Demnach entspricht das jeweilige Dämpfungsmoment der Formel

$$M_T \;=\; M_{TC} + M_{TV}$$

wobei

$$M_{TC} \;=\; \frac{F}{\sin(\alpha - \rho)}\, \diagup n \quad \text{und}$$

$$M_{TV} \;=\; \frac{X}{Y}\, \frac{M_n}{\sin(\alpha - \rho)}\, \diagup n$$

In der Formel bezeichnen

F : die Federkraft der Vorspannfeder 20

$\alpha$ : den Winkel zwischen dem Spannkeil und dem Reibelement

$\rho$ : den Tangens des Reibungsfaktors zwischen dem Spannkeil und dem Reibelement

$\diagup n$ : dem Reibungsfaktor zwischen dem Reibelement und dem Federgehäuse

X : Stückzahl der an der Dämpfung teilnehmenden momentübertragenden Federn

Y : Stückzahl aller momentübertragender Federn.

Es ist offensichtlich, dass das erforderliche Dämpfungsmoment mit dem Wert des $\alpha$-Winkels und mit der Anzahl der an der Dämpfung teilnehmenden momentübertragenden Federn leicht eingestellt werden kann.

Wenn der Kupplungsreibteller dort eingebaut wird, wo die Richtung der Momentübertragung sich ändert, z. B. das Moment des Antriebs und der Motorbremse (Bergabfahrt) bei Kraftfahrzeugen, scheint es zweckmässig für die Dämpfung in beiden Richtungen zu sorgen. In diesem Fall müssen die Feder eingebaut werden, wie dies an Fig. 5 und 6 ersichtlich ist.

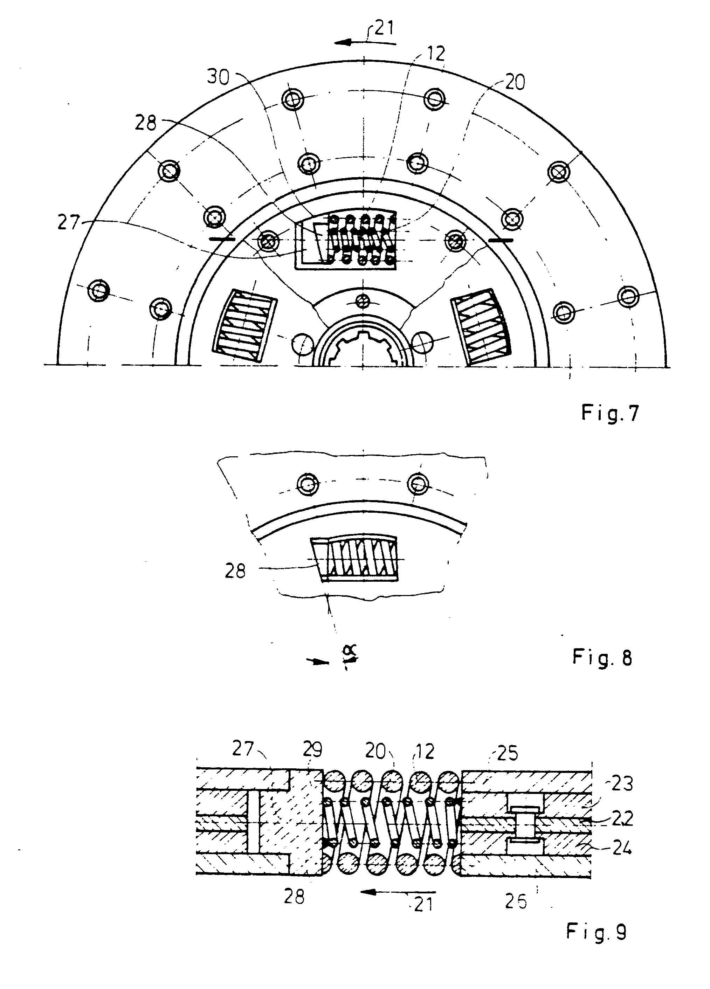

Auf die vorherbeschriebene Weise sind an dem einen Ende der momentübertragenden Feder 12 die Spannkeile 14, 15, sowie die Reibelemente 16 und 17 eingebaut ; an dem anderen Ende sind auf ähnliche Weise die Spannkeile 14 und 15, sowie die Reibelemente 16 und 17 eingebaut. Die Dämpfung findet sinngemäss in beiden Richtungen, wie bereits geschildert, statt. Eine weitere konstruktive Gestaltung ist aus den Fig. 7, 8 und 9 erkennbar.

Der in der Mitnehmerscheibe 22 und in den die Scheibe umschließenden Stützscheiben 23 und 24 zur Aufnahme der momentübertragenden Feder 12 dienende Ausschnitt ist in der einen Richtung länger als der Normalausschnitt, wobei die dem Mittelpunkt des Kupplungsreibtellers ferner liegende Seite in eine Fläche fortgesetzt wird, deren Radius einen mit dem Mittelpunkt des Kupplungsreibtellers übereinstimmenden Mittelpunkt ergibt.

In diesem verlängerten Teil ist das Reibelement 27 angeordnet.

Die Reibfläche 30 des Reibelements 27 liegt an der radialen Fläche des Ausschnitts der Mitnehmerscheibe 22 und der Stützscheibe 23, 24 an ; dementsprechend ist sie selbst radial.

An dem Reibelement 27 sind die an beiden Seiten in die Ebene der Federgehäuse 25 und 26 hineinragenden Vorsprünge 28 und 29 vorgesehen, die am Ende des in den Federgehäusen 25 und 26 befindlichen Ausschnitts anliegen. Das Ende des Ausschnitts und die Fläche der daran sich abstützenden Vorsprünge 28 und 29 schliessen mit der auf der Längsachse der momentübertragenden Feder stehenden Normalen einen Winkel α ein.

Die momentübertragende Feder 12 liegt unmittelbar an dem Reibelement 27 an.

Die Dämpfung des Kupplungsreibtellers findet folgenderweise statt.

Nach erfolgtem Anlassen des Motors und nachdem die Kupplung geschlossen worden ist, bringt das Schwungrad die Mitnehmerscheibe 22 aus ihrem Stillstand, der mit dem Pfeil 21 bezeichneten Drehrichtung entsprechend, zum Ausschlag. Jetzt wird das mit dem Reibelement entgegengesetzte Ende der momentübertragenden Feder 12 nur auf der Mitnehmerscheibe anliegen, da in einem von dem übertragenen Moment abhängigen Mass die Federgehäuse gegenüber der Mitnehmerscheibe 22 in Verspätung sind.

Die momentübertragende Feder 12 presst das Reibelement 27 auf die in der Mitnehmerscheibe 22 und in den Stützscheiben 23 und 24 ausgestaltete radiale Fläche. Mit Hinsicht darauf, dass das Reibelement 27 sich mit den Federgehäusen 25, 26 mitbewegt, sichert die entstehende Reibung die Dämpfung auf die bereits geschilderte Weise.

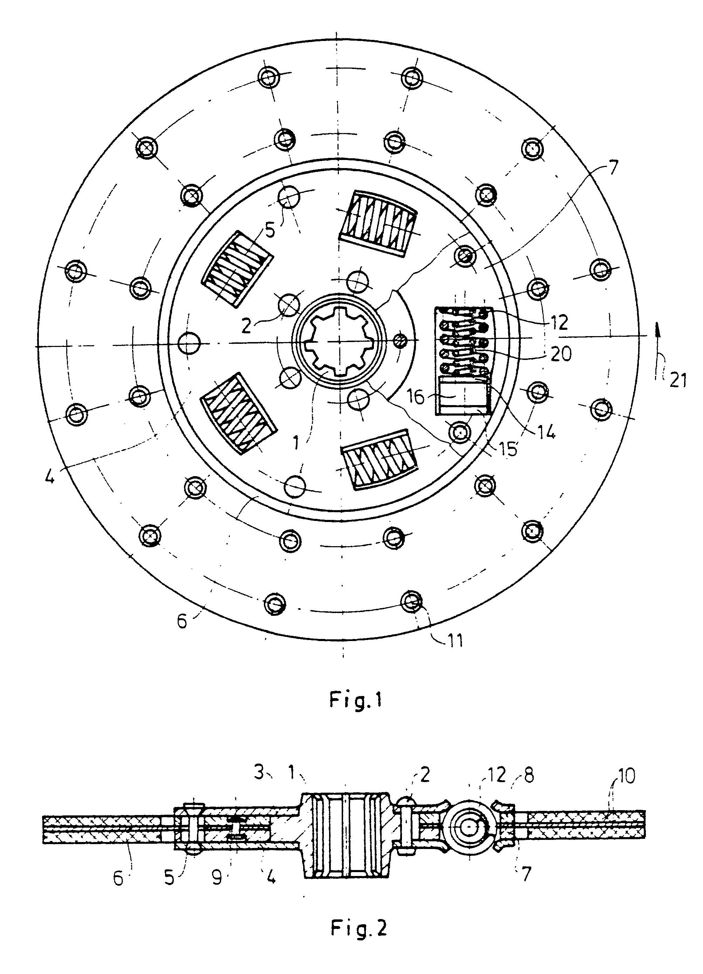

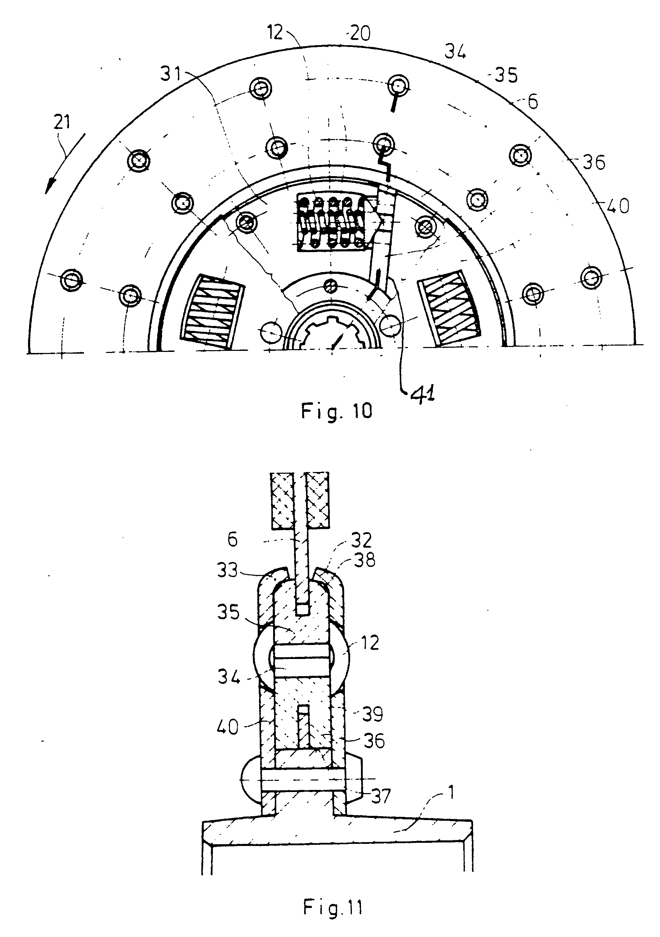

Eine weitere Anordnungsmöglichkeit ist in Fig. 10 und 11 dargestellt. Bei dieser Anordnung ist der im Zusammenhang mit Fig. 1, 2 und 3 beschriebene Ausschnitt in der Mitnehmerscheibe 6 zur Aufnahme der Dämpfelemente, bei der momentübertragenden Feder 12 ausgestaltet; in den die Mitnehmerscheibe 6 zweiseitig umschliessenden Stützscheiben 31 ist die Leitung 41 angeordnet.

Das Ende der momentübertragenden Feder 12 stützt sich auf den in dem verlängerten Teil des Ausschnitts der Mitnehmerscheibe 6 liegenden Spannkeil 34 ab. In der Leitung 41 ist je ein « U »-förmiges Reibelement 35 und 36 angeordnet. Das geschlossene Ende der Reibelemente 35 und 36 liegt auf dem Spannkeil 34 an.

An dem äusseren Flansch der Federgehäuse 38 und 39 sind die kegeligen Mäntel 32, 33 ausgestaltet, deren Rand mit dem grösseren Durchmesser sich mit einer Spalte der Mitnehmerscheibe 6 anpasst.

Die Reibfläche 37 des Reibelements 36 liegt auf der äusseren Mantelfläche der Nabe 1 an, während die Reibfläche 38 des Reibelements 35 auf der Innenfläche des kegeligen Mantels 32, 33 anliegt.

Die Wirkungsweise des erfindungsgemässen Kupplungsreibtellers ist wie folgt:

Beim Schliessen der Kupplung nimmt die sich in der mit dem Pfeil 21 bezeichneten Richtung verdrehende Mitnehmerscheibe 6 die angenieteten Stützscheiben 31 mit sich.

Die Stützscheiben 31 pressen mit der Seite der Leitung 41 die Reibelemente 35, 36 an den Spannkeil 34, wodurch der Spannkeil an den Mantel der Nabel und der Federgehäuse 39, 40 gedrückt wird. Die so entstandene Reibung sichert die Dämpfung.

Der Vorteil dieser Lösung liegt darin, dass auf in dem ungarischen Patent HU-PS 155.646 beschriebene Weise auch eine von der Umdrehungszahl abhängige Dämpfung erreicht wird.

Diese Lösung kann auch so realisiert werden, dass nur das eine Reibelement eingesetzt wird.

Bei allen vorherbeschriebenen Kupplungsreibtellern haben wir die mit der momentübertragenden Feder parallel angeordnete Vorspannfeder angewendet. Die Vorspannfeder kann auch weggelassen werden, wodurch Grunddämpfung nicht erzeugt wird; nur die von dem Moment abhängige Dämpfung wird erzeugt.

## Patentansprüche

1. Kupplungsreibteller, insbesondere für Kraftfahrzeuge, der über eine zwischen dem antreibenden und angetriebenen Teil eingesetzte tangentiale momentübertragende Feder (12) verfügt, wobei zwischen dem antreibenden und angetriebe Teil sich wenigstens ein Reibelement befindet, dadurch gekennzeichnet, dass zwischen wenigstens dem einen Ende der Feder (12) und der dazu gehörenden Stützfläche (13) ein Vermittlungselement (14, 34) eingesetzt ist, das mit dem Reibelement (16, 17; 35, 36) in Wirkverbindung steht und dessen Reibfläche sich entweder auf dem antreibenden Teil oder auf dem angetriebenen Teil abstützt, das so in die von dem antreibenden Teil (6) der momentübertragenden Feder (12) und dem angetriebenen Teil (3, 4, 32, 33) gebildeten kraftübertragenden Kette eingefügt ist, dass das Reibelement sich auf einem der Teile (6; 1, 3, 4, 32, 33) abstützt, und das Vermittlungselement (14, 34) zwischen dem anderen der Teile (6; 1, 3, 4, 32, 33) und der momentübertragenden Feder (12) eingesetzt ist.

2. Kupplungsreibteller nach Anspruch 1, dadurch gekennzeichnet, dass das Vermittlungselement (14, 34) ausser der momentübertragenden Feder (12) auch mit einer dazu parallel angeordneten, schwächeren Vorspannfeder (20) in Wirkverbindung steht und das andere Ende der Vorspannfeder (20) sich auf demselben Teil aus den antreibenden (6) und angetriebenen Teilen (3, 4, 32, 33) abstützt, mit dem auch das Vermittlungselement (14, 34) in direkter Verbindung steht.

3. Kupplungsreibteller nach Anspruch 1 oder 2, dadurch gekennzeichnet, dass das Vermittlungselement durch einen tangential angeordneten Spannkeil (14, 34) gebildet ist, auf dessen geneigter Fläche sich die Rückseite des Reibelements (16, 17; 35, 36) abstützt.

4. Kupplungsreibteller nach jedwelchem der Ansprüche 1 bis 3, dadurch gekennzeichnet, dass das Reibelement (16, 17) sich auf der Innenfläche des Federgehäuses (3, 4) abstützt.

5. Kupplungsreibteller nach jedwelchem der Ansprüche 1 bis 3, dadurch gekennzeichnet, dass das Reibelement (36) sich auf der Mantelfläche der Nabe (1) abstützt.

6. Kupplungsreibteller nach jedwelchem der Ansprüche 1 bis 4, dadurch gekennzeichnet, dass wenigstens zwei Reibelemente (16, 17, 35, 36) vorgesehen sind, die mit der Rückseite gegeneinander angeordnet sind.

7. Kupplungsreibteller nach jedwelchem der Ansprüche 1 bis 6, dadurch gekennzeichnet, dass die beiden mit den Rückseiten gegeneinander angeordneten Reibelemente (16, 17) sich auf der Innenfläche der Seiten des Federgehäuses (3, 4) abstützen.

8. Kupplungsreibteller nach jedwelchem der Ansprüche 1 bis 6, dadurch gekennzeichnet, dass eines der beiden mit der Rückseite gegeneinander angeordneten Reibelemente (36) sich auf dem Mantel der Nabe (1), das andere Reibelement (36) sich auf der Innenfläche des äusseren Mantels des Federgehäuses (32, 33) abstützt.

9. Kupplungsreibteller nach jedwelchem der Ansprüche 1 bis 8, dadurch gekennzeichnet, dass wenigstens ein Vermittlungselement (14) und ein damit in Wirkverbindung stehendes Reibelement (16, 17) vorgesehen sind, die an dem gegenüber den anderen Elementen (14, 16, 17) entgegengesetzten Ende der momentübertragenden Feder (12) angeordnet sind.

10. Kupplungsreibteller, insbesondere für Kraftfahrzeuge, der über eine zwischen dem antreibenden (22) und angetriebenen Teil (25, 26) eingesetzte tangentiale momentübertragende Feder (12) verfügt, wobei zwischen dem antreibenden und angetriebenen Teil sich wenigstens ein Reibelement befindet, dessen Reibfläche sich entweder auf dem antreibenden Teil oder auf dem angetriebenen Teil abstützt, dadurch gekennzeichnet, daß zwischen wenigstens dem einen Ende der Feder (12) und dem antreibenden Teil (22) oder dem angetriebenen Teil (25, 26) das Reibelement (27, 28, 29) angeordnet ist und daß sich die Feder (12) mit ihrem anderen Ende am entsprechend anderen Teil abstützt.

**Claims**

1. Clutch friction disc, particularly for motor vehicles, which comprises a tangential moment-transmitting spring (12) interposed between the driving and the driven part, while at least one friction element is disposed between the driving and the driven part the friction surface of which bears either on the driving part or on the driven part, characterised in that a communication element (14, 34) in operative connection with the friction element (16, 17 ; 35, 36) is inserted at least between the one end of the spring (12) and the support surface (13) associated with it and is fitted into the power-transmission chain formed by the driving part (6), the moment-transmitting spring (12) and the driven part (3, 4, 32, 33) in such a way that the friction element is supported one one of the parts (6 ; 1, 3, 4, 32, 33) and the communication element (14, 34) is inserted between the other of the parts (6 ; 1, 3, 4, 32, 33) and the moment-transmitting spring (12).

2. Clutch friction disc according to claim 1, characterised in that the communication element (14, 34) is in operative connection, in addition to the moment-transmitting spring (12), with a weaker preloading spring (20) arranged parallel thereto and the other end of the preloading spring (20) is supported on the same one of the driving (6) and driven parts (3, 4, 32, 33) with which the communication element (14, 34) is also in direction connection.

3. Clutch friction disc according to claim 1 or 2, characterised in that the communication element is formed by a tangentially arranged stressing wedge (14, 34) on the inclined face of which the rear of the friction element (16, 17 ; 35, 36) is supported.

4. Clutch friction disc according to any one of claims 1 to 3, characterised in that the friction element (36) is supported on the inner surface of the spring housing (3, 4).

5. Clutch friction disc according to any one of claims 1 to 3, characterised in that the friction element (36) is supported on the peripheral surface of the hub (1).

6. Clutch friction disc according to any one of claims 1 to 4, characterised in that at least two friction elements (16, 17, 35, 36) are provided which are arranged back-to-back against one another.

7. Clutch friction disc according to any one of claims 1 to 6, characterised in that the two friction elements (16, 17) arranged back-to-back against one another are supported on the inner surfaces of the sides of the spring housing (3, 4).

8. Clutch friction disc according to any one of claims 1 to 6, characterised in that one of the two friction elements (36) arranged back-to-back against one another is supported on the periphery of the hub (1), the other friction element (36) being supported on the inner surface of the outer periphery of the spring housing (32, 33).

9. Clutch friction disc according to any one of claims 1 to 8, characterised in that at least one communication element (14) and one friction element (16, 17) in operative connection therewith are provided which are arranged on the end of the moment-transmitting spring (12) set oppositely in relation to the other elements (14, 16, 17).

10. Clutch friction disc, especially for motor vehicles, which comprises a tangential, moment-transmitting spring (12) inserted between the driving part (22) and the driven part, while between the driving and driven parts at least one friction element is situated the friction face of which is supported either on the driving part or on the driven part, characterised in that the friction element (27, 28, 29) is arranged between at least the one end of the spring (12) and the driving part (22) or the driven part (25, 26) and in that the spring (12) is supported with its other end on the corresponding other part.

## Revendications

1. Disque de friction d'embrayage, en particulier pour véhicules automobiles, comportant un ressort (12) qui transmet tangentiellement le couple et qui est placé entre la partie menante et la partie menée, étant précisé qu'entre la partie menante et la partie menée se trouve au moins un élément de friction dont la surface de friction s'appuie soit sur la partie menante, soit sur la partie menée, caractérisé en ce qu'entre au moins l'une des extrémités du ressort (12) et la surface d'appui correspondante (13) est placé un élément intermédiaire (14, 34) qui est en liaison positive avec l'élément de friction (16, 17 ; 35, 36) et qui est inséré dans la chaîne de transmission de la force, formée de la partie menante (6), du ressort de transmission de couple (12) et de la partie menée (3, 4, 32, 33), de façon telle que l'élément de friction s'appuie sur l'une des parties (6 ; 1, 3, 4, 32, 33) et que l'élément intermédiaire (14, 34) est placé entre l'autre des parties (6 ; 1, 3 ; 4, 32, 33) et le ressort de transmission du couple (12).

2. Disque de friction d'embrayage selon la revendication 1, caractérisé en ce qu'en plus du ressort de transmission du couple (12), l'élément intermédiaire (14, 34) est également en liaison positive avec un ressort de précontrainte plus faible (20) disposé parallèlement au ressort de transmission du couple ; et en ce que l'autre extrémité du ressort de précontrainte (20) s'appuie sur la même partie, de la partie menante (6) et de la partie menée (3, 4, 32, 33), que celle avec laquelle l'élément intermédiaire (14, 34) est également en liaison directe.

3. Disque de friction d'embrayage selon la revendication 1 ou 2, caractérisé en ce que l'élément intermédiaire est formé par un coin de bridage (14, 34) qui est disposé tangentiellement, et sur la surface inclinée duquel s'appuie la face arrière de l'élément de friction (16, 17 ; 35, 36).

4. Disque de friction d'embrayage selon l'une quelconque des revendications 1 à 3, caractérisé en ce que l'élément de friction (16, 17) s'appuie sur la surface interne de la cage des ressorts (3, 4).

5. Disque de friction d'embrayage selon l'une quelconque des revendications 1, 3, caractérisé en ce que l'élément de friction (36) s'appuie sur la surface latérale du moyeu (1).

6. Disque de friction d'embrayage selon l'une quelconque des revendications 1 à 4, caractérisé en ce qu'il est prévu au moins deux éléments de friction (16, 17 ; 35, 36) qui sont disposés l'un contre l'autre par leur face arrière.

7. Disque de friction d'embrayage selon l'une quelconque des revendications 1 à 6, caractérisé en ce que les deux éléments de friction (16, 17) qui sont disposés l'un contre l'autre par leur face arrière s'appuient sur la surface intérieure des faces de la cage des ressorts (3, 4).

8. Disque de friction d'embrayage selon l'une quelconque des revendications 1 à 6, caractérisé en ce que l'un des deux éléments de friction (36) qui sont disposés l'un contre l'autre par leur face arrière s'appuie sur la surface latérale du moyeu (1) et en ce que l'autre élément de friction (36) s'appuie sur la surface intérieure de l'enveloppe extérieure de la cage des ressorts (32, 33).

9. Disque de friction d'embrayage selon l'une quelconque des revendications 1 à 8, caractérisé en ce qu'il est prévu au moins un élément intermédiaire (14) et un élément de friction (16, 17), en liaison positive avec lui, qui sont disposés à l'extrémité opposée, par rapport aux autres éléments (14, 16, 17), du ressort de transmission du couple (12).

10. Disque de friction d'embrayage, en particulier pour véhicules automobiles, comportant un ressort (12) qui transmet tangentiellement le couple et qui est placé entre la partie menante (22) et la partie menée, étant précisé qu'entre la partie menante et la partie menée se trouve au moins un élément de friction dont la surface de friction s'appuie soit sur la partie menante, soit sur la partie menée, caractérisé en ce que l'élément de friction (27, 28, 29) est disposé entre au moins l'une des extrémités du ressort (12) et la partie menante (22) ou la partie menée (25, 26), et en ce que le ressort (12) s'appuie par son autre extrémité contre l'autre partie correspondante.

Fig.1

Fig.2

Fig. 3 a

Fig. 3b

Fig. 4

Fig.5

Fig. 6

Fig. 7

Fig. 8

Fig. 9

4

Fig. 10

Fig.11